# EUROPEAN PATENT SPECIFICATION

(11) **EP 2 799 483 B1**
(45) Date of publication and mention of the grant of the patent: **23.08.2017**
(21) Application number: 12863797.2
(22) Date of filing: 28.11.2012
(51) Int. Cl.: B29C 41/14, B29K 9/00, C08L 9/10, C08L 53/02, C08J 3/07, C08J 5/02, B29K 105/00, B29K 296/04

(54) **LATEX, COMPOSITION FOR DIP MOLDING AND DIP MOLDED BODY**
LATEX, ZUSAMMENSETZUNG FÜR EINE TAUCHFORMUNG UND TAUCHGEFORMTER KÖRPER
LATEX, COMPOSITION POUR MOULAGE PAR IMMERSION ET CORPS MOULÉ PAR IMMERSION

(30) Priority: 27.12.2011 JP 2011284803
(43) Date of publication of application: 05.11.2014
(73) Proprietor: Zeon Corporation, Tokyo 100-8246 (JP)
(72) Inventor: SATOH, Yoshitaka, Tokyo 1008246 (JP); ISHIDU, Osamu, Tokyo 1008246 (JP); EMORI, Yuki, Tokyo 1008246 (JP); NAKAMURA, Yoshiyuki, Tokyo 1008246 (JP)
(74) Representative: Adam, Holger
(86) International application number: PCT/JP2012/080718
(87) International publication number: WO 2013/099501

(56) References cited:
- WO-A1-2005/049725
- WO-A1-2006/057392
- WO-A1-2010/098008
- JP-A- S6 336 803
- JP-A- S54 124 045
- JP-A- 2003 517 073
- JP-A- 2004 285 305
- JP-A- 2006 219 609
- JP-A- 2009 209 229
- JP-A- 2009 533 501
- JP-A- 2011 219 543
- JP-A- 2011 518 233
- JP-A- 2011 527 376
- JP-A- 2012 062 487

## Description

### TECHNICAL FIELD

The present invention relates to a latex and dip-forming composition, more preferably relates to a latex and dip-forming composition which are suppressed in formation of aggregates and occurrence of foaming and can give a dip-formed article which is excellent in strength.

### BACKGROUD ART

In the past, it has been known to dip-form a dip-forming composition which contains a latex of natural rubber to obtain a nipple, balloon, glove, medical balloon, sack, or other dip-formed article which is used in contact with the human body. However, a latex of natural rubber contains proteins which cause allergic reactions in the human body, so sometimes there was a problem as a dip-formed article which directly contacts the mucous membrane or organs of the body. For this reason, rather than a latex of natural rubber, use of a latex of synthetic polyisoprene rubber or styrene-isoprene-styrene block copolymer has been studied.

For example, JP 2009-179680 A discloses the art of concentrating a latex of synthetic polyisoprene by a sealed disc type continuous centrifuge. Further, JP 2009-209229 A discloses a dip-forming composition which comprises a latex of synthetic polyisoprene into which sulfur, zinc oxide, and a specific vulcanization accelerator and dispersant are mixed. Furthermore, JP 2011-219543 A discloses a dip-forming composition which contains a specific dispersant. Among further prior art, WO 2010/098008 A1 discloses a composition for dip forming which comprises a synthetic polyisoprene latex, a sulfur-containing vulcanizing agent, zinc oxide, a vulcanization accelerator, and a dispersant, said dispersant being either a salt of an olefinic compound/ethylenically unsaturated dicarboxylic acid copolymer having a weight-average molecular weight of 1000 to 150000 and/or a salt of an olefinic compound/ethylenically unsaturated dicarboxylic monoester copolymer having a weight-average molecular weight of 1000 to 150000. Furthermore, JP 2011-527376 A discloses a process for the preparation of an articifical latex, comprising the steps: (a) emulsification of a cement comprising a rubber dissolved in a suitable organic solvent, together with an aqueous surfactant solution, thus forming an oil-in-water emulsion; (b) step-wise reduction of a solvent content of the oil-in-water emulsion in two or more stages resulting in an artificial latex.

However, in recent years, the properties demanded in the case of using a dip-formed article as a glove etc. have become severer. Further improvement of the strength has been sought. In particular, in the art which is disclosed in JP 2009-179680 A, there is the problem of severe foaming caused by agitation at the time of transport or at the time of mixing. A latex with such severe foaming results in many pinholes and other defects, so there was the problem of difficulty of use for gloves, medical balloons, and other applications where pinholes are important items to be controlled.

### SUMMARY OF THE INVENTION

### PROBLEM TO BE SOLVED BY THE INVENTION

The present invention has as its object the provision of a latex which is suppressed in formation of aggregates and occurrence of foaming and which can give a dip-formed article which is superior in strength. Further, the present invention has as its object the provision of a dip-forming composition and dip-formed article which are obtained by using such a latex.

### MEANS FOR SOLVING THE PROBLEMS

The inventors engaged in intensive research so as to solve the above problem and as a result discovered that a latex of synthetic polyisoprene and/or a styrene-isoprene-styrene block copolymer which has a specific weight average molecular weight and volume average particle size and has a total content of an alicyclic hydrocarbon solvent and aromatic hydrocarbon solvent of a specific amount or less enables this object to be achieved and thereby completed the present invention.

That is, according to the present invention, there is provided a latex of synthetic polyisoprene with a weight average molecular weight of 10,000 to 5,000,000, a volume average particle size of 0.5 to 10 µm, and a content of a total of an alicyclic hydrocarbon solvent and aromatic hydrocarbon solvent of 500 weight ppm or less, wherein
the latex is obtained by emulsifying a solution or fine suspension of synthetic polyisoprene which have been dissolved or finely dispersed in an organic solvent in the presence of surfactant which includes a sodium salt or potassium salt of a fatty acid and alkylbenzene sulfonate in water and removing the organic solvent,
a ratio of use of the sodium salt or potassium salt of a fatty acid and alkylbenzene sulfonate is 1:1 to 10:1 as a weight ratio of "sodium salt or potassium salt of a fatty acid":"alkylbenzene sulfonic acid salt" when emulsifying, and
a residual amount of the surfactant in the latex is 0.5 to 2 parts by weight with respect to 100 parts by weight of the total of the synthetic polyisoprene.

In the present invention, the latex of synthetic polyisoprene is obtained by emulsifying a solution or fine suspension of synthetic polyisoprene which has been dissolved or finely dispersed in an organic solvent in the presence of a sodium salt or potassium salt of a fatty acid and alkylbenzene sulfonate in water and removing the organic solvent. Note that, preferably the organic solvent is an alicyclic hydrocarbon solvent and/or aromatic hydrocarbon solvent.

In the present invention, preferably the alicyclic hydrocarbon solvent is cyclohexane and the aromatic hydrocarbon solvent is toluene.

In the present invention, preferably the sodium salt or potassium salt of a fatty acid is sodium rosinate and the alkylbenzene sulfonic acid salt is sodium dodecylbenzene sulfonate.

Further, according to the present invention, there is provided a dip-forming composition which contains the latex, sulfur-based vulcanizer, and vulcanization accelerator. Preferably the dip-forming composition further contains zinc oxide.

Furthermore, according to the present invention, there is provided a dip-formed article obtained by dip-forming the above dip-forming composition.

### EFFECTS OF THE INVENTION

According to the present invention, it is possible to provide a latex which is suppressed in formation of aggregates and occurrence of foaming and which can give a dip-formed article which is superior in strength, a dip-forming composition which is obtained by using such a latex, and a dip-formed article which is obtained by forming the dip-forming composition.

### DESCRIPTION OF EMBODIMENTS

The latex of the present invention is a latex of synthetic polyisoprene with a weight average molecular weight of 10,000 to 5,000,000, a volume average particle size of 0.5 to 10 µm, and a content of a total of an alicyclic hydrocarbon solvent and aromatic hydrocarbon solvent of 500 weight ppm or less.

### Synthetic Polyisoprene Latex

The synthetic polyisoprene latex used in the present invention is a latex of synthetic polyisoprene which is obtained by polymerization of isoprene.

As the isoprene units in the synthetic polyisoprene, according to the bonding state of the isoprene, four types of cis-bond units, trans-bond units, 1,2-vinyl-bond units, and 3,4-vinyl bond units are present.

Further, from the viewpoint of improving the tensile strength of the dip-formed article, the ratio of content of the cis-bond units in the isoprene units which are contained in the synthetic polyisoprene is preferably 70 wt% or more with respect to the total isoprene units, more preferably 90 wt% or more, particularly preferably 95 wt% or more.

The synthetic polyisoprene has a weight average molecular weight, by conversion to standard polystyrene by gel permeation chromatography, of 10,000 to 5,000,000, preferably 500,000 to 5,000,000, particularly preferably 800,000 to 3,000,000. If the synthetic polyisoprene is too small in weight average molecular weight, the dip-formed article tends to fall in tensile strength, while conversely if too large, a latex of synthetic polyisoprene tends to become difficult to produce.

Further, the synthetic polyisoprene has a polymer Mooney viscosity [ML₁₊₄, 100°C] of preferably 50 to 80, more preferably 60 to 80, particularly preferably 70 to 80.

The latex particles (synthetic polyisoprene particles) in the synthetic polyisoprene latex have a volume average particle size of 0.5 to 10 µm, preferably 0.5 to 3 µm, more preferably 0.5 to 2 µm. If this volume average particle size is too small, sometimes the latex viscosity becomes too high and handling becomes difficult, while conversely if too large, when storing the synthetic polyisoprene latex, a membrane sometimes forms on the latex surface.

The synthetic polyisoprene latex has an electroconductivity of preferably 0.1 mS/cm to 2.0 mS/cm, more preferably 0.2 mS/cm or more and less than 1.0 mS/cm. In the present invention, by giving the synthetic polyisoprene latex an electroconductivity of 0.2 mS/cm or more and less than 1.0 mS/cm, the obtained dip-formed article can be further raised in strength, so this is particularly preferable. If the electroconductivity is less than 0.1 mS/cm, sometimes a large amount of aggregates is formed at the time of emulsification or the time of concentration. Further, if the electroconductivity exceeds 2.0 mS/cm, foaming becomes severe at the time of removal of the solvent, foaming becomes severe at the time of transporting the dip-forming composition or the time of mixing it, and sometimes pinholes and other defects remain in the glove.

Note that, the electroconductivity is a value which is measured using an electroconductivity meter made by METTLER TOLEDO (product name: SG78-FK2) at a measurement temperature of 25°C.

Further, the total content of the alicyclic hydrocarbon solvent and aromatic hydrocarbon solvent in the synthetic polyisoprene latex is 500 weight ppm or less, preferably 300 weight ppm or less, more preferably 100 weight ppm or less. Further, as the alicyclic hydrocarbon solvent, cyclohexane is preferable, while as the aromatic hydrocarbon solvent, toluene is preferable. If the total content of the alicyclic hydrocarbon solvent and aromatic hydrocarbon solvent, in particular, the total content of the cyclohexane and toluene, is too large, the dip-forming composition tends to become sharper in odor. Note that, the lower limit of the total content of the alicyclic hydrocarbon solvent and aromatic hydrocarbon solvent is not particularly limited, but is usually 1 weight ppm or so.

Here, the alicyclic hydrocarbon solvent and aromatic hydrocarbon solvent, as later explained, are organic solvents for dissolving or finely dispersing the synthetic polyisoprene when producing the synthetic polyisoprene latex.

Note that, the total content of the alicyclic hydrocarbon solvent and aromatic hydrocarbon solvent can be measured by gas chromatography or other generally usable measurement method.

The synthetic polyisoprene latex of the present invention is obtained by emulsifying a solution or fine suspension of synthetic polyisoprene dissolved or finely dispersed in an organic solvent in the presence of a surfactant in water and, removing the organic solvent as needed, and thereby producing a synthetic polyisoprene latex is employed, since it is possible to use synthetic polyisoprene with a high ratio of cis-bond units in the isoprene units and a dip-formed article which is superior in tensile strength can be obtained. Such method is preferred in comparison to other methods such as the method of polymerizing isoprene alone or a mixture of isoprene and an ethylenically unsaturated monomer which can copolymerize with this by emulsion polymerization or suspension polymerization to directly produce a synthetic polyisoprene latex.

The synthetic polyisoprene can be obtained by the conventional known method, for example, by using a Ziegler type polymerization catalyst comprised of trialkylaluminum-titanium tetrachloride or an alkyl lithium polymerization catalyst comprised of n-butyllithium, or sec-butyllithium to polymerize isoprene in an inert polymerization solvent by solution polymerization. Further, the obtained polymer solution of the synthetic polyisoprene may be used as it is, but it is also possible to take out solid synthetic polyisoprene from the polymer solution, then dissolve the solid synthetic polyisoprene in an organic solvent for use.

At this time, it is also possible to remove the residue of the polymerization catalyst which remains in the polymer solution and other impurities after synthesizing polyisoprene. Further, it is also possible to add the later explained antiaging agent during polymerization or after polymerization.

Further, it is also possible to use a commercially available solid type synthetic polyisoprene.

As the organic solvent used in the method of production of (1), for example, benzene, toluene, xylene, or other aromatic hydrocarbon solvent; cyclopentane, cyclopentene, cyclohexane, cyclohexene, or other alicyclic hydrocarbon solvent; pentane, hexane, heptane, or other aliphatic hydrocarbon solvent; dichloromethane, chloroform, ethylene dichloride, or other halogenated hydrocarbon solvent; etc. may be mentioned. Among these, an aromatic hydrocarbon solvent and alicyclic hydrocarbon solvent are preferable, while cyclohexane and toluene are particularly preferable.

Note that, the amount of use of the organic solvent is preferably 2,000 parts by weight or less with respect to 100 parts by weight of the synthetic polyisoprene, more preferably 20 to 1,500 parts by weight.

As the surfactant used in the method of production of (1), for example, a polyoxyethylenealkyl ether, polyoxyethylenealkylphenol ether, polyoxyethylenealkyl ester, polyoxyethylenesorbitan alkyl ester, or other nonionic surfactant; a sodium or potassium salt of lauric acid, myristic acid, palmitic acid, oleic acid, linoleic acid, rosin acid, or other fatty acid, sodium dodecylbenzene sulfonate or other alkylbenzene sulfonic acid salt, higher alcohol sulfuric acid ester salt, alkyl sulfosuccinic acid salt, or other anionic surfactant; alkyl trimethylammonium chloride, dialkyldimethyl ammonium chloride, alkylbenzyldimethyl ammonium chloride, or other cationic surfactant; a sulfoester of an α,β-unsaturated carboxylic acid, a sulfate ester of an α,β-unsaturated carboxylic acid, a sulfoalkylaryl ether, or other copolymerizable surfactant; etc. may be mentioned, but an anionic surfactant is suitable. A sodium salt or potassium salt of a fatty acid or an alkylbenzene sulfonic acid salt is more preferable, in particular, since the polymerization catalyst which remains in a trace amount derived from the synthetic polyisoprene can be more efficiently removed, joint use of a sodium salt or potassium salt of a fatty acid and an alkylbenzene sulfonic acid salt is preferable. Note that, as the sodium salt or potassium salt of a fatty acid, sodium rosinate is preferable. Further, as the alkylbenzene sulfonic acid salt, sodium dodecylbenzene sulfonate is preferable. Note that, these surfactants may be used as single type alone or as two types or more together.

The amount of use of the surfactant is preferably 0.5 to 50 parts by weight with respect to 100 parts by weight of the synthetic polyisoprene, more preferably 0.5 to 30 parts by weight, furthermore preferably 5 to 25 parts by weight. Note that, when using two types or more of surfactants, the amount of use of these in total is preferably made in this range. That is, for example, when using a sodium salt or potassium salt of a fatty acid and an alkylbenzene sulfonic acid salt together, making the total of the amounts of use of these in this range is preferable. If the amount of use of the surfactant is too small, a large amount of aggregates is liable to be formed at the time of emulsification, while conversely if too large, foaming easily occurs and a problem may arise at the time of dip-forming.

Further, when using, as a surfactant constituted, a sodium salt or potassium salt of a fatty acid and an alkylbenzene sulfonic acid salt together, the ratio of use of these is preferably made a weight ratio of "a sodium salt or potassium salt of a fatty acid":"alkylbenzene sulfonic acid salt" 1:1 to 10:1 in range, more preferably 1:1 to 7:1 in range. If the amount of use of the alkylbenzene sulfonic acid salt is too large, the foaming at the time of handling the synthetic polyisoprene is liable to become severe. Due to this, a long period of standing, addition of a defoamer, or other operation becomes necessary and deterioration of the work efficiency and increased cost are liable to be led to. On the other hand, if the amount of use of the alkylbenzene sulfonic acid salt is too small, a large amount of aggregates will form at the time of emulsification and a normal emulsion is liable to be unable to be obtained.

The amount of the water used in the method of production of (1) is preferably 50 to 5,000 parts by weight with respect to 100 parts by weight of the synthetic polyisoprene, more preferably 100 to 3,000 parts by weight.

As the type of the water which is used, hard water, soft water, ion exchanged water, distilled water, zeolite water, etc. may be mentioned. Further, a polar solvent such as methanol or another alcohol may be used together with the water.

The apparatus of emulsifying an organic solvent solution or fine suspension of the synthetic polyisoprene in the presence of a surfactant in water is not particularly limited so long as one which generally commercially available as an emulsifier or disperser. Further, the method of addition of the surfactant is not particularly limited. It may be added in advance to water and/or an organic solvent solution or fine suspension of synthetic polyisoprene, added to the emulsion right in the middle of the emulsification operation, added all together, or added in batches.

As the emulsification apparatus, for example, product name: Homogenizer (made by IKA), product name: Polytron (made by Kinematica), product name: TK Autohomomixer (made by Tokushu Kika Kogyo), or other batch type emulsifier; product name: TK Pipeline Homomixer (made by Tokushu Kika Kogyo), product name: Colloid Mill (made by Kobelco Pantech), product name: Thrasher (made by Nippon Coke & Engineering), product name: Trigonal Wet Type Micropulverizer (made by Mitsui Miike Koki), product name: Cavitron (made by Eurotech), product name: Milder (made by Pacific Machinery & Engineering), product name: Fineflow Mill (made by Pacific Machinery and Engineering), or other continuous type emulsifier; product name: Microfluidizer (made by Mizuho Industrial), product name: Nanomizer (made by Nanomizer), product name: APV Gaulin (made by Gaulin), or other high pressure emulsifier; membrane emulsifier (made by Reica) or other membrane emulsifier; product name: Vibromixer (made by Reica) or other vibration type emulsifier; product name: ultrasonic homogenizer (made by Branson) or other ultrasonic emulsifier; etc. may be mentioned. Note that, the conditions of the emulsification operation by the emulsification apparatus are not particularly limited. It is sufficient to suitably select the treatment temperature, treatment time, etc. so as to obtain the desired dispersed state.

In the method of (1), it is desirable to remove the organic solvent from the emulsion which is obtained by the emulsification operation so as to obtain a synthetic polyisoprene latex. The method of removing the organic solvent from the emulsion is not particularly limited so long as a method which can make the total content of the organic solvent constituted by the alicyclic hydrocarbon solvent and aromatic hydrocarbon solvent in the obtained synthetic polyisoprene latex 500 weight ppm or less. Vacuum distillation, ordinary pressure distillation, steam distillation, centrifugation, or other method may be employed.

Further, after removing the organic solvent, in accordance with need, to raise the solid content concentration of the synthetic polyisoprene latex, vacuum distillation, ordinary pressure distillation, centrifugation, membrane concentration, or other method may be used for a concentration operation. In particular, from the viewpoint of raising the solid content concentration of the synthetic polyisoprene latex and reducing the residual amount of surfactant in the synthetic polyisoprene latex, centrifugation is preferable.

The centrifugation is preferably performed, for example, by using a continuous centrifuge under conditions of a centrifugal force of preferably 4,000 to 5,000G, a solid content concentration of the synthetic polyisoprene latex before centrifugation of preferably 2 to 15 wt%, a flow rate of feed into the centrifuge of preferably 500 to 1700 kg/hr, and a back pressure (gauge pressure) of the centrifuge of preferably 0.03 to 1.6 MPa. Then, it is possible to obtain a synthetic polyisoprene latex as the light liquid after centrifugation, and due to this, it is possible to reduce the residual amount of surfactant in the synthetic polyisoprene latex.

Here, in the present invention, the centrifugation may be performed by the above conditions, but as an example of more preferable centrifugation conditions, a centrifugal force of 4,000 to 5,000G, a solid content concentration of the synthetic polyisoprene latex before centrifugation of 3 to 12 wt%, a flow rate of feed into the centrifuge of 800 to 1700 kg/hr, and a back pressure (gauge pressure) of the centrifuge of 0.06 to 1.4 MPa are preferable. By using such more preferable centrifugation conditions for centrifugation, the residual amount of surfactant in the obtained synthetic polyisoprene latex can be made 0.5 to 2 parts by weight. Due to this, the effect of suppression of the occurrence of foaming of the obtained synthetic polyisoprene latex can be heightened more and the obtained dip-formed article can be improved in tensile strength. Note that, the solid content concentration of the synthetic polyisoprene latex which is obtained as the light liquid after centrifugation is usually 30 to 70 wt%.

Note that, the above more preferable centrifugation conditions are an example of conditions. In particular, according to the findings of the inventors etc., the residual amount of surfactant in the synthetic polyisoprene latex depends on the conditions at the time of centrifugation. By suitably setting the conditions at the time of centrifugation, it is possible to control the residual amount of surfactant. That is, for example, it becomes possible to reduce the residual amount of surfactant the stronger the centrifugal force is made. Similarly, the lower the solid content concentration of the synthetic polyisoprene latex before centrifugation, the lower the flow rate of feed into the centrifuge or the more the back pressure of the centrifuge is lowered, the more the residual amount of the surfactant can be reduced. For this reason, in the present invention, by suitably balancing these conditions, it is possible to make the residual amount of surfactant in the synthetic polyisoprene latex 0.5 to 2 parts by weight with respect to 100 parts by weight of the synthetic polyisoprene. Alternatively, in the present invention, it is possible to use a method other than centrifugation to make the residual amount of the surfactant in the above range of course. In this case as well, similar effects can be exhibited.

Note that, if the residual amount of the surfactant is too large, when transporting the synthetic polyisoprene latex or when stirring the formulation, the foaming becomes severe and a long period of standing, addition of a defoamer, or other operation is liable to become necessary. In particular, a defoamer should not be added as much as possible since it leads to causes of cissing or pinholes when made into a dip-formed article, so as the treatment when foaming occurs, a long period of standing is the general practice, so in this case, there is the problem that the productivity ends up falling.

The synthetic polyisoprene latex used in the present invention has a solid content concentration of preferably 30 to 70 wt%, more preferably 40 to 70 wt%. If the solid content concentration is too low, when storing the synthetic polyisoprene latex, there is a concern over the synthetic polyisoprene particles separating, while conversely if too high, sometimes the synthetic polyisoprene particles agglomerate whereby coarse aggregates are formed.

Further, the synthetic polyisoprene latex may have blended into it an additive which is usually blended in the field of latexes such as a pH adjuster, defoamer, preservative, cross-linking agent, chelating agent, oxygen trapper, dispersant, antiaging agent, etc.

As the pH adjuster, for example, sodium hydroxide, potassium hydroxide, or other hydroxide of an alkali metal; sodium carbonate, potassium carbonate, or other carbonate of an alkali metal; sodium hydrogen carbonate or other hydrogen carbonate of an alkali metal; ammonia; trimethylamine, triethanolamine, or other organic amine compound; etc. may be mentioned, but a hydroxide of an alkali metal or ammonia is preferable.

### Dip-forming composition

The dip-forming composition of the present invention includes, in addition to the latex of the present invention, a sulfur-based vulcanizer and vulcanization accelerator.

As the sulfur-based vulcanizer, for example, powdered sulfur, sulfur white, precipitated sulfur, colloidal sulfur, surface-treated sulfur, insoluble sulfur, or other sulfur; sulfur chloride, sulfur dichloride, morpholine disulfide, alkylphenol disulfide, N,N'-dithio-bis(hexahydro-2H-azepinone-2), phosphorus-containing polysulfide, high molecular weight polysulfide, 2-(4'-morpholinodithio)benzothiazole, or other sulfur-containing compound may be mentioned. Among these as well, sulfur can be preferably used. These sulfur-based vulcanizers may be used as single type alone or as two types or more together.

The amount of use of the sulfur-based vulcanizer is not particularly limited, but is preferably 0.1 to 10 parts by weight with respect to 100 parts by weight of the total of the synthetic polyisoprene and SIS, more preferably 0.2 to 3 parts by weight. If this amount is too small or too large, the dip-formed article tends to drop in tensile strength.

As the vulcanization accelerator, one which is normally used in dip-forming can be used. For example, diethyldithiocarbamic acid, dibutyldithiocarbamic acid, di-2-ethylhexyldithiocarbamic acid, dicyclohexyldithiocarbamic acid, diphenyldithiocarbamic acid, dibenzyldithiocarbamic acid, or other dithiocarbamic acids and their zinc salts; 2-mercaptobenzothiazole, zinc 2-mercaptobenzothiazole, 2-mercaptothiazoline, dibenzothiazyl disulfide, 2-(2,4-dinitrophenylthio)benzothiazole, 2-(N,N-diethylthiocarbylthio) benzothiazole, 2-(2,6-dimethyl-4-morpholinothio)benzothiazole, 2-(4'-morpholinodithio)benzothiazole, 4-morphonilyl-2-benzothiazyl disulfide, 1,3-bis(2-benzothiazyl mercaptomethyl)urea, etc. may be mentioned, but zinc diethyldithiocarbamate, 2-mercaptobenzothiazole, and zinc 2-mercaptobenzothiazole are preferable. These vulcanization accelerators may be used as single type alone or as two types or more together.

The amount of use of the vulcanization accelerator is preferably 0.05 to 5 parts by weight with respect to 100 parts by weight of the total of the synthetic polyisoprene and SIS, more preferably 0.1 to 2 parts by weight. If the amount is small, sometimes the dip-formed article will fall in tensile strength. Further, if this amount is excessive, sometimes the dip-formed article falls in elongation and tensile strength.

The dip-forming composition of the present invention preferably further contains zinc oxide.

The content of the zinc oxide is not particularly limited, but is preferably 0.1 to 5 parts by weight with respect to 100 parts by weight of the total of the synthetic polyisoprene and SIS, more preferably 0.2 to 2 parts by weight. If this amount is too small, the dip-formed article tends to fall in tensile strength, conversely if too large, the synthetic polyisoprene particles or SIS particles in the dip-forming composition sometimes fall in stability and coarse aggregates are formed.

The dip-forming composition of the present invention preferably contains, as the dispersant, a salt of an unsaturated bond-containing nonpolar compound-ethylenically unsaturated dicarboxylic acid mono ester polymer with a weight average molecular weight of 1,000 to 150,000.

The unsaturated bond-containing nonpolar compound which forms the unsaturated bond-containing nonpolar compound-ethylenically unsaturated dicarboxylic acid mono ester polymer is not particularly limited so long as a hydrocarbon compound which has carbon-carbon unsaturated bonds, but, for example, ethylene; propylene, 1-butene, 1-pentene, 1-hexene, or other α-olefin; cyclobutene, cyclopentene, cyclohexene, or other cyclomonoolefin; 1,3-butadiene, isoprene, 1,3-pentadiene, cyclopentadiene, or other conjugated diene; styrene, methylstyrene, ethylstyrene, α-methylstyrene, or other aromatic vinylhydrocarbon; etc. may be mentioned. Among these as well, from the viewpoint of being more superior in the dispersion stabilization effect, an aromatic vinylhydrocarbon is preferable, while styrene is more preferable. These unsaturated bond-containing nonpolar compounds may be used as single type alone or two types or more together.

As the ethylenically unsaturated dicarboxylic acid mono ester which forms the unsaturated bond-containing nonpolar compound-ethylenically unsaturated dicarboxylic acid mono ester polymer, for example, monomethyl fumarate, monoethyl fumarate, monopropyl fumarate, monobutyl fumarate, monopentyl fumarate, monocyclohexyl fumarate, monomethyl maleate, monoethyl maleate, monopropyl maleate, monobutyl maleate, monopentyl maleate, monocyclohexyl maleate, monomethyl itaconate, monoethyl itaconate, monopropyl itaconate, monobutyl itaconate, monocyclohexyl itaconate, monomethyl citraconate, monoethyl citraconate, monopropyl citraconate, monobutyl citraconate, monocyclohexyl citraconate, etc. may be mentioned, but monomethyl maleate and monobutyl maleate are preferable. Note that, the ethylenically unsaturated dicarboxylic acid mono esters may be used in a state neutralized by using a base and in the state of a salt structure.

Further, these ethylenically unsaturated dicarboxylic acid mono esters may be used as single type alone or as two types or more together.

The unsaturated bond-containing nonpolar compound-ethylenically unsaturated dicarboxylic acid mono ester polymer may be produced by a conventionally known polymerization method.

For example, it may be produced by mixing the above-mentioned unsaturated bond-containing nonpolar compound and ethylenically unsaturated dicarboxylic acid mono ester in a desired ratio and using benzoyl peroxide, cumen hydroperoxide, or other organic peroxide or azobisisobutyronitrile, or other azo compound as a polymerization initiator for polymerization.

Further, the molecular weight of the polymer can be adjusted by adjusting the concentration of the polymerization initiator or the polymerization temperature or adding a suitable amount of the thiol compound or alcohol compound which functions as a molecular weight adjuster.

Note that, after forming a polymer of an unsaturated bond-containing nonpolar compound and ethylenically unsaturated dicarboxylic acid anhydride, it is also possible to react the dicarboxylic acid anhydride groups in the polymer with the corresponding methanol, ethanol, propanol, butanol, or other alcohol to convert this to a monoester structure of a dicarboxylic acid.

These unsaturated bond-containing nonpolar compound-ethylenically unsaturated dicarboxylic acid mono ester polymers may be used as single type alone or as two types or more together.

In the unsaturated bond-containing nonpolar compound-ethylenically unsaturated dicarboxylic acid mono ester polymer, the molar ratio of the units which are derived from the unsaturated bond-containing nonpolar compound and the units which are derived from the ethylenically unsaturated dicarboxylic acid mono ester is preferably 30:70 to 80:20, more preferably 40:60 to 75:25. If in this range, the dispersion stabilization effect tends to be improved.

The unsaturated bond-containing nonpolar compound-ethylenically unsaturated dicarboxylic acid mono ester polymer has a weight average molecular weight of preferably 1,000 to 150,000, more preferably 3,000 to 120,000, particularly preferably 3,000 to 100,000. If the weight average molecular weight is in this range, the obtained dip-forming composition tends to be improved in storage stability.

When not using a salt structure ethylenically unsaturated dicarboxylic acid mono ester, the salt of the unsaturated bond-containing nonpolar compound-ethylenically unsaturated dicarboxylic acid mono ester polymer may be produced by making the obtained polymer react with a base to neutralize the carboxyl groups in the polymer to convert to a salt structure.

The base used for the neutralization is not particularly limited, but sodium hydroxide, potassium hydroxide, or other hydroxide of an alkali metal; sodium carbonate, potassium carbonate, or other carbonate of an alkali metal; sodium hydrogencarbonate or other hydrogencarbon salt of an alkali metal; ammonia; trimethyl ammonium, triethanolamine, or other organic amine compound may be mentioned, while sodium hydroxide is preferably used.

The reaction rate of the neutralization reaction (ratio neutralized by base in total carboxyl groups in the polymer) is preferably 70% or more, more preferably 80% or more. Neutralizing all of the carboxyl groups in the polymer is particularly preferable.

Note that, the unsaturated bond-containing nonpolar compound-ethylenically unsaturated dicarboxylic acid mono ester polymer and its salt used may be a commercially available product.

The amount of use of the salt of the unsaturated bond-containing nonpolar compound-ethylenically unsaturated dicarboxylic acid mono ester polymer is preferably 0.1 to 10 parts by weight with respect to 100 parts by weight of the total of the synthetic polyisoprene and SIS, more preferably 0.3 to 3 parts by weight. If this amount is small, the dip-forming composition tends to fall in storage stability, while conversely if the amount is excessive, sometimes there is the problem that the dip-forming composition easily foams and pinholes are formed in the dip-formed article.

A salt of the unsaturated bond-containing nonpolar compound-ethylenically unsaturated dicarboxylic acid mono ester polymer forms a salt structure, so easily dissolves in water and can be handled in the state of an aqueous solution. The concentration is not particularly limited, but 5 to 45 wt% is preferable.

The dip-forming composition of the present invention preferably contains a monovalent salt of a dithiocarbamic acid (except one which corresponds to the above-mentioned "vulcanization accelerator").

The content of the monovalent salt of the dithiocarbamic acid is preferably 0.1 to 1 part by weight with respect to 100 parts by weight of the total of the synthetic polyisoprene, more preferably 0.1 to 0.6 part by weight, particularly preferably 0.2 to 0.5 part by weight.

If the content of the monovalent salt of the dithiocarbamic acid is small, the vulcanization time tends to become longer, while conversely if large, when the storage time of the dip-forming composition is long, the obtained dip-formed article suffers from cracks and its merchandise value remarkably falls.

As the dithiocarbamic acid which forms the monovalent salt of the dithiocarbamic acid, dimethyldithiocarbamic acid, diethyldithiocarbamic acid, dibutyldithiocarbamic acid, N-pentamethylenedithiocarbamic acid, di-2-ethylhexyldithiocarbamic acid, dicyclohexyldithiocarbamic acid, etc. may be mentioned.

Further, as the base which forms a monovalent salt of dithiocarbamic acid, lithium hydroxide, sodium hydroxide, potassium hydroxide, or other alkali metal hydroxide; ammonia; trimethylamine, triethanolamine, piperidine, or other organic amine; may be mentioned.

As specific examples of the monovalent salt of the dithiocarbamic acid, sodium dimethyldithiocarbamate, sodium diethyldithiocarbamate, sodium dibutyldithiocarbamate, sodium N-pentamethylenedithiocarbamate, potassium dimethyldithiocarbamate, potassium diethyldithiocarbamate, potassium dibutyldithiocarbamate, potassium N-pentamethylenedithiocarbamate, or other alkali metal salts of dithiocarbamic acids; ammonium dimethyldithiocarbamate, ammonium diethyldithiocarbamate, ammonium dibutyldithiocarbamate, ammonium N-pentamethylenedithiocarbamate, or other ammonium salts of dithiocarbamic acids; dimethyldithiocarbamic acid piperidine salt, diethyldithiocarbamic acid piperidine salt, dibutyldithiocarbamic acid piperidine salt, N-pentamethylenedithiocarbamic acid piperidine salt, or other piperidine salts of dithiocarbamic acids; etc. may be mentioned, but since the vulcanization time can be shortened and even if making the vulcanization time long, the formation of cracks in the dip-formed article can be easily suppressed, sodium dibutyldithiocarbamate and an N-pentamethylenedithiocarbamic acid piperidine salt are preferable.

These monovalent salts of the dithiocarbamic acids may be used as single type alone or as two types or more together.

If the monovalent salt of the dithiocarbamic acid is water soluble, it can be added in the state of an aqueous solution. If handling the monovalent salt of the dithiocarbamic acid in the state of an aqueous solution, its concentration is not particularly limited, but is usually 2 to 30 mass%. In the state of an overly high concentration aqueous solution, if adding the synthetic polyisoprene latex, sometimes coarse aggregates form at the time of addition.

The dip-forming composition of the present invention may further have blended into it an antiaging agent; carbon black, silica, talc, or other reinforcing agent; calcium carbonate, clay, or other filler; ultraviolet absorber; plasticizer; or other compounding agent as needed.

As the antiaging agent, 2,6-di-4-methylphenol, 2,6-di-t-butylphenol, butylhydroxyanisole, 2,6-di-t-butyl-α-dimethylamino-p-cresol, octadecyl-3-(3,5-di-t-butyl-4-hydroxyphenyl)propionate, styrenate phenol, 2,2'-methylene-bis(6-a-methyl-benzyl-p-cresol), 4,4'-methylenebis(2,6-di-t-butylphenol), 2,2'-methylene-bis(4-methyl-6-t-butylphenol), alkylated bisphenol, butylated reaction products of p-cresol and dicyclopentadiene, or other phenol-based antiaging agents not containing sulfur atoms; 2,2'-thiobis-(4-methyl-6-t-butylphenol), 4,4'-thiobis-(6-t-butyl-o-cresol), 2,6-di-t-butyl-4-(4,6-bis(octylthio)-1,3,5-triazin-2-ylamino)phenol, or other thiobisphenol-based antiaging agents; tris(nonylphenyl)phosphite, diphenylisodecylphosphite, tetraphenyldipropyleneglycol diphosphite, or other phosphorous acid ester-based antiaging agents; dilauryl thiodipropionate or other sulfur ester-based antiaging agents; phenyl-α-naphthylamine, phenol-β-naphthylamine, p-(p-toluenesulfonylamide)-diphenylamine, 4,4'-(α,α-dimethylbenzyl)diphenylamine, N,N-diphenyl-p-phenylenediamine, N-isopropyl-N'-phenyl-p-phenylenediamine, butylaldehyde-aniline condensates or other amine-based antiaging agents; 6-ethoxy-2,2,4-trimethyl-1,2-dihydroquinoline or other quinoline-based antiaging agents; 2,5-di-(t-amyl)hydroquinone or other hydroquinone-based antiaging agents; etc. may be mentioned. These antiaging agents may be used as single type alone or as two types or more together.

The amount of use of the antiaging agent is preferably 0.05 to 10 parts by weight with respect to 100 parts by weight of the total of synthetic polyisoprene, more preferably 0.1 to 5 parts by weight.

If this amount is small, the synthetic polyisoprene sometimes deteriorates. Further, if this amount is excessive, the dip-formed article sometimes falls in tensile strength.

The method of preparation of the dip-forming composition is not particularly limited. As the method of preparation, the method of using a ball mill, kneader, disperser, or other dispersion machine to mix into the latex of the synthetic polyisoprene a sulfur-based vulcanizer, vulcanization accelerator, and optionally zinc oxide, the above dispersant and monovalent salt of dialkyldithiocarbamic acid, and the antiaging agent or other compounding agent which is mixed in according to need, the method of using the above dispersion machine to prepare an aqueous dispersion of the desired mixing ingredients other than the latex of the synthetic polyisoprene in advance, then mixing the aqueous dispersion in the latex of synthetic polyisoprene, etc. may be mentioned. Further, it is possible to mix in advance said dispersant and monovalent salt of dialkyldithiocarbamic acid with a latex of synthetic polyisoprene, then adding a sulfur-based vulcanizer, vulcanization accelerator, antiaging agent, or other compounding agent.

The dip-forming composition has a pH of preferably 7 or more, more preferably a pH of 8 to 12 in range.

Further, the dip-forming composition has a solid content concentration of preferably 15 to 65 wt% in range.

The dip-forming composition of the present invention is preferably subject to an aging (also referred to as "prevulcanization") before being used for dip-forming.

The time of prevulcanization is not particularly limited. While depending on the prevulcanization temperature, it is preferably 1 to 14 days, more preferably 1 to 7 days. If this time is too short or too long, the obtained dip-formed article tends to fall in tensile strength.

Further, the prevulcanization temperature is preferably 23 to 40°C.

Further, after the prevulcanization to when used for dip-forming, it is preferable to store the composition at preferably 10 to 30°C of temperature. If stored as is in a high temperature, the obtained dip-formed article tends to fall in tensile strength.

### Dip-formed article

The dip-formed article of the present invention is obtained by dip-forming the dip-forming composition of the present invention.

Dip-forming is the method of dipping a mold in the dip-forming composition, depositing the composition on the surface of the mold, then pulling up the mold from the composition, then drying the composition deposited on the surface of the mold.

The mold may also be preheated before being dipped in the dip-forming composition.

Before dipping the mold in the dip-forming composition or after pulling up the mold from the dip-forming composition, it is possible to use a coagulating agent in accordance with need.

As specific examples of the method of use of a coagulating agent, there are the method of dipping a mold before dipping in the dip-forming composition in a solution of a coagulating agent to deposit the coagulating agent on the mold (anode coagulant dipping method), the method of dipping a mold on which the dip-forming composition is deposited in a coagulating agent solution (teague coagulant dipping method), etc., but the anode deposition dipping method is preferable on the point of a dip-formed article with little unevenness of thickness being obtained.

As specific examples of the coagulant, barium chloride, calcium chloride, magnesium chloride, zinc chloride, aluminum chloride, or other metal halides; barium nitrate, calcium nitrate, zinc nitrate, or other nitrates; barium acetate, calcium acetate, zinc acetate, or other acetates; calcium sulfate, magnesium sulfate, aluminum sulfate, or other sulfates; or other water-soluble polyvalent metal salts. Among these, a calcium salt is preferable, and calcium nitrate is more preferable.

These water-soluble polyvalent metal salts may be used as single type alone or as two types or more together.

The coagulating agent is preferably used in the state of an aqueous solution. This aqueous solution may further contain methyl alcohol, ethyl alcohol, or other water-soluble organic solvent or a nonionic surfactant. The concentration of the coagulating agent may differ depending on the type of the water-soluble polyvalent metal salt, but is preferably 5 to 50 wt%, more preferably 10 to 30 wt%.

The mold is pulled up from the dip-forming composition, then usually is heated to make the deposit which is formed on the mold dry. The drying conditions may be suitably selected.

Next, this is heated to vulcanize the deposit which is formed on the mold.

The heating conditions at the time of vulcanization are not particularly limited, but are preferably 60 to 150°C, more preferably 100 to 130°C of heating temperature and preferably 10 to 120 minutes of heating time.

The method of heating is not particularly limited, but there is the method of heating in an oven by warm air, the method of irradiating infrared rays for heating, etc.

Further, before heating or after heating the mold on which the dip-forming composition is deposited, the water-soluble impurities (for example, excess surfactant or coagulating agent) are preferably removed by washing the mold by water or warm water. The warm water which is used is preferably 40°C to 80°C, more preferably 50°C to 70°C.

The vulcanized dip-formed article is detached from the mold. As specific examples of the detachment method, there is the method of peeling the article off from the mold by hand, the method of peeling it off by water pressure or compressed air pressure, etc. If the dip-formed article in the middle of vulcanization has sufficient strength for detachment, it may be detached in the middle of vulcanization and then the vulcanization continued.

When the dip-formed article is a glove, to prevent dip-formed articles from sticking to each other at the contacting surfaces and improve the slip at the time of attachment and detachment, talc, calcium carbonate, or other inorganic microparticles or starch particles or other organic microparticles may be sprinkled over the glove surface, an elastomer layer which contains microparticles may be formed on the glove surface, or the surface layer of the glove may be chlorinated.

### EXAMPLES

Below, examples will be used to explain the present invention in detail. Note that, the "%" and "parts" below are based on weight unless otherwise indicated. Note that, the various physical properties were measured as explained below.

### Weight Average Molecular Weight

The synthetic polyisoprene latex or SIS latex was dissolved in tetrahydrofuran to a solid content concentration of 0.1 wt%. This solution was analyzed by gel permeation chromatography to calculate the weight average molecular weight converted to standard polystyrene.

### Amount of Cis-Bond Units

Methanol was added to the synthetic polyisoprene latex to make it coagulate. The obtained coagulate was dried, then analyzed by ¹H-NMR to find the ratio of cis-bond units to all isoprene units in the synthetic polyisoprene.

### Volume Average Particle Size

A light scattering diffraction particle measurement apparatus (made by Coulter: product name "LS-230") was used to find the volume average particle size of the latex particles.

### Residual Amount of Surfactant

A latex of synthetic polyisoprene 0.15 g was weighed and added to ultrapure water 2 ml, then acetonitrile was added to adjust the solution to 10 ml. Next, the supernatant was filtered by a 0.2 µm disk filter, then reversed phase high pressure liquid chromatography (HPLC) was used for measurement under the following conditions to find the residual amount of surfactant per 100 parts by weight of the synthetic polyisoprene (solid content).
Column: product name "ZORBOX XDB-C18 1.8µ" (made by Agilant Technologies)
Column temperature: 40°C
Flow rate: 0.75 ml/min.
Detector: DAD (diode array detector)
Injection amount: 2 µL

### Foaming Test

A Klaxon type mechanical stability tester (made by Ueshima Seisakusho) was used to stir a synthetic polyisoprene latex in a predetermined container (inside diameter 58 mm, height 126 mm). The time for foaming to cause overflow from a predetermined container was evaluated. Note that, inherently, a Klaxon type mechanical stability tester is a tester which evaluates the mechanical stability, but in this embodiment, it was used for comparison of the ease of foaming.

As a specific test method, first, the synthetic polyisoprene latex was adjusted in solid content to 50 wt%, then this was taken into a predetermined container (inside diameter 58 mm, height 126 mm) in an amount of 50 g, this was stirred by a diameter 36 mm, thickness 1.8 mm disk at a high speed of 14000 rpm, and the time until the foam overflowed from the predetermined container was measured. The longer this time, the more difficult foaming can be judged as.

### Tensile Strength of Dip-formed article

The dip-formed article was measured for tensile strength based on ASTM D412.

A dip-formed film was punched by a dumbbell (Die-C) to prepare a test piece for measurement of the tensile strength. The test piece was pulled by a Tensilon Universal Testing Machine (product name "RTC-1225A" (made by Orientech) at a tensile speed of 500 mm/min to measure the tensile stress at the time of 300% stretching stress (units: MPa), tensile strength right before break (units: MPa), and elongation right before break (units: %).

Note that, in the following examples, the examples of use of synthetic polyisoprene are shown, but even if using SIS or SI (styrene-isoprene block copolymer), the invention can be similarly worked.

### Reference Example 1

### (Synthetic Polyisoprene Latex)

Synthetic polyisoprene with a weight average molecular weight of 1,300,000 (product name "NIPOL IR2200L", made by Zeon Corporation, homopolymer of isoprene, amount of cis-bond units: 98%) was mixed with cyclohexane and stirred while raising the temperature to 60°C to dissolve and prepare a cyclohexane solution (a) of polyisoprene with a viscosity which was measured by a B-type viscometer of 12000 mPa·s (solid content concentration: 8 wt%).

On the other hand, sodium rosinate and sodium dodecylbenzene sulfonate were mixed with water to prepare concentration 1.5 wt% emulsifying agent aqueous solution (b) which contains a mixture of a weight ratio of sodium rosinate/sodium dodecylbenzene sulfonate=2/1 at a temperature of 60°C.

Next, the above cyclohexane solution (a) and the above emulsifying agent aqueous solution (b) were mixed to give a weight ratio of 1:1.2 by using a product name: Multiline Mixer MS26-MMR-5.5L (made by Satake Chemical Equipment Mfg), then a product name: Milder MDN310 (made by Pacific Machinery & Engineering) was used to mix the mixture at 4100 rpm and emulsify it to obtain an emulsion (c). Note that, at this time, the feed rate of the total of the cyclohexane solution (a) and the emulsifying agent aqueous solution (b) was 2,000 kg/hr, the temperature was 60°C, and the back pressure (gauge pressure) was 0.5 MPa.

Next, the emulsion (c) was warmed under a reduced pressure of - 0.01 to -0.09 MPa (gauge pressure) to 80°C and the cyclohexane was distilled off to obtain an aqueous dispersion (d) of synthetic polyisoprene. At this time, product name: SM5515 (made by Toray Dow Corning) as a defoamer was sprayed and continuously added to an amount of 300 weight ppm with respect to the synthetic polyisoprene in the emulsion (c).

Note that, when distilling off the cyclohexane, the emulsion (c) was prepared to 70 volume% or less of the volume of the tank and stirred using a rotor blade constituted by a three-stage slanted paddle blade slowly at 60 rpm.

Further, after the obtained cyclohexane finished being distilled off, the obtained aqueous dispersion (d) was centrifuged using a continuous centrifuge (product name: SRG510, made by Alfa Laval) at 4,000 to 5,000G to obtain a light liquid constituted by a solid content concentration 57 wt% synthetic polyisoprene latex (e) and a heavy liquid constituted by the remaining liquid (f). Note that, the conditions at the time of the centrifugation were a solid content concentration of the aqueous dispersion (d) before centrifugation of 10 wt%, the flow rate at the time of continuous centrifugation was 1300 kg/hr, and the back pressure of the centrifuge (gauge pressure) was 1.5 MPa.

The obtained synthetic polyisoprene latex (e) had a weight average molecular weight of 1,600,000, a volume average particle size of 1.2 µm, an electroconductivity (measured at 25°C using an electroconductivity meter (product name: SG78-FK2) made by METTLER TOLEDO) of 1.2 mS/cm, pH=10, a surface tension of 32 mN/m, a viscosity measured by a B-type viscometer of 100 mPa·s, a cyclohexane content of 50 weight ppm, and an emulsifying agent content of 3 parts per 100 parts of synthetic polyisoprene. Further, aggregates could not be observed in the latex (e). Note that, the ratio of the cis-bond units of the synthetic polyisoprene in the latex (e) was 98 wt%.

Further, the remaining liquid (f) of the heavy liquid was filtered by a filtration machine (product name: SSDF, made by Kotobuki Industries) and the "filtrate" comprised of the emulsifying agent and water was reused as part of the above emulsifying agent aqueous solution (b).

### (Dip-forming composition)

The above obtained synthetic polyisoprene latex (e) was stirred while a 5 wt% sodium dibutyldithiocarbamate aqueous solution was added (amount of addition of 0.4 part of sodium dibutyldithiocarbamate with respect to 100 parts of synthetic polyisoprene).

Next, a styrene-maleic acid mono-sec-butyl ester-maleic acid monomethyl ester polymer (product name: Scripset 550, made by Hercules) was treated using sodium hydroxide to neutralize 100% of the carboxyl groups in the polymer to prepare a dispersant (g) constituted by a sodium salt aqueous solution (concentration 10 wt%). Further, this dispersant (g) was added to 0.6 part, converted to solid content, with respect to 100 parts of synthetic polyisoprene.

Further, the obtained mixture was stirred while adding aqueous dispersions of the different ingredients so as to give, converted to solid content for 100 parts of synthetic polyisoprene in the mixture, zinc oxide 1.5 parts, sulfur 1.5 parts, antiaging agent (product name: Wingstay L, made by Goodyear) 2 parts, zinc diethyldithiocarbamate 0.35 part, and zinc salt of mercaptobenzothiazole 0.3 part, then a potassium hydroxide aqueous solution was added to obtain a dip-forming composition (h) which was adjusted in pH of 10.5.

After this, the obtained dip-forming composition (h) was aged at 25°C for 96 hours.

### (Dip-formed article)

A glass mold roughened on its surface (diameter about 5 cm, rough part length about 15 cm) was washed, preheated in a 70°C oven, dipped in a coagulant aqueous solution comprised of 16 wt% of calcium nitrate and 0.05 wt% of polyoxyethylene lauryl ether (product name: Emalgen 109P, made by Kao) for 5 seconds, then taken out.

Next, the glass mold which was coated with the coagulant was dried in a 70°C oven. After this, the glass mold which was coated with the coagulant was taken out from the oven, dipped in a 25°C dip-forming composition (h) for 10 seconds, then taken out and dried at room temperature for 60 minutes. The glass mold which was coated with the film was placed in the oven, was raised in temperature over 25 minutes from 50°C to 60°C and preheated, then was placed in a 70°C oven and allowed to stand for 10 minutes to further dry it. Further, the glass mold was dipped in 60°C warm water for 2 minutes, then was air dried at room temperature for 10 minutes. After this, the glass mold which was coated with the film-shaped synthetic polyisoprene was placed in an oven and vulcanized at 100°C for 60 minutes. The glass mold which was coated with the vulcanized film was cooled down to room temperature and was coated with talc, then the film was peeled off from the glass mold. The obtained film-shaped synthetic polyisoprene (dip-formed article) was measured for tensile stress, tensile strength, and elongation. The results are shown in Table 1.

### Example 2

Except for, when preparing the emulsion (c), making the ratio of mixture of the cyclohexane solution (a) and the emulsifying agent aqueous solution (b) a weight ratio of 1:0.8 and making the conditions at the time of centrifugation a centrifugal force of 5000G, a solid content concentration of the aqueous dispersion (d) before centrifugation of 6 wt%, a flow rate at the time of continuous centrifugation of 900 kg/hr, and a back pressure (gauge pressure) of the centrifuge of 0.08 MPa, the same procedure was followed as in Example 1 to obtain a synthetic polyisoprene latex, dip-forming composition, and dip-formed article and the same procedure was followed to evaluate them. The results are shown in Table 1.

Note that, no aggregates were observed in the latex after centrifugation.

### Example 3

Except for using, as an emulsifying agent aqueous solution (b), an aqueous solution of sodium rosinate and sodium dodecylbenzene sulfonate in a weight ratio of sodium rosinate/sodium dodecylbenzene sulfonate of 6.5/1, the same procedure was followed as in Example 2 to obtain a synthetic polyisoprene latex, dip-forming composition, and dip-formed article and the same procedure was followed to evaluate them. The results are shown in Table 1.

Note that, no aggregates were observed in the latex after centrifugation.

### Example 4

Except for using, as an emulsifying agent aqueous solution (b), an aqueous solution of sodium rosinate and sodium dodecylbenzene sulfonate in a weight ratio of sodium rosinate/sodium dodecylbenzene sulfonate of 1.6/1 and making the ratio of amounts of the cyclohexane solution (a) and emulsifying agent aqueous solution (b) a weight ratio of 1:0.69, the same procedure was followed as in Example 2 to obtain a synthetic polyisoprene latex, dip-forming composition, and dip-formed article and the same procedure was followed to evaluate them. The results are shown in Table 1.

Note that, no aggregates were observed in the latex after centrifugation.

### Comparative Example 1

Except for using, as an emulsifying agent aqueous solution (b), an aqueous solution which contains only sodium dodecylbenzene sulfonate in 1.5 wt% in concentration, removing the cyclohexane until the cyclohexane becomes 1000 weight ppm, and further making the conditions at the time of centrifugation a solid content concentration of the aqueous dispersion (d) before centrifugation 10 wt%, making the flow rate at the time of continuous centrifugation 1700 kg/hr, and making the back pressure of the centrifuge 2.0 MPa, the same procedure was followed as in Example 2 to obtain a synthetic polyisoprene latex, dip-forming composition, and dip-formed article and the same procedure was followed to evaluate them. The results are shown in Table 1.

**Table 1**

| | | Example 1 | Example 2 | Example 3 | Example 4 | Comp. Ex. 1 |
|---|---|---|---|---|---|---|
| Manufacturing conditions of latex | Amount of synthetic polyisoprene (parts) | 100 | 100 | 100 | 100 | 100 |
| | Concentration of cyclohexane solution of synthetic polyisoprene (wt%) | 8 | 8 | 8 | 8 | 8 |
| | Amount of sodium rosinate (parts) | 15 | 10 | 13 | 8 | 0 |
| | Amount of sodium dodecylbenzene sulfonate (parts) | 7.5 | 5 | 2 | 5 | 15 |
| | Sodium rosinate/sodium dodecylbenzene sulfonate (weight ratio) | 2/1 | 2/1 | 6.5/1 | 1.6/1 | - |
| | Solid content concentration of aqueous dispersion before centrifugation (wt%) | 10 | 6 | 6 | 6 | 10 |
| | Flow rate at time of continuous centrifugation (kg/hr) | 1300 | 900 | 900 | 900 | 1700 |
| | Back pressure of continuous centrifugation (MPa) | 1.5 | 0.08 | 0.08 | 0.08 | 2.0 |
| latex | Weight average molecular weight | 1,600,000 | 1,600,000 | 1,600,000 | 1,600,000 | 1,600,000 |
| | Volume average particle size (*µ*m) | 1.2 | 1.2 | 1.2 | 1.0 | 0.8 |
| | Electroconductivity (mS/cm) | 1.2 | 0.6 | 0.7 | 0.6 | 4.4 |
| | Cyclohexane content (weight ppm) | 50 | 50 | 50 | 50 | 1000 |
| | Residual amount of surfactant in 100 parts of synthetic polyisoprene (parts) | 3 | 1.4 | 1.7 | 1.2 | 10.1 |
| | pH= | 10 | 10 | 10 | 10 | 10 |
| | Surface tension (mN/m) | 32 | 32 | 33 | 32 | 30 |
| | Viscosity (mPa·s) | 100 | 65 | 95 | 48 | 1200 |
| | Foaming test (s) | 120 | 330 | 210 | 180 | 20 |
| | Solid content concentration (wt%) | 57 | 56 | 56 | 56 | 56 |
| Dip-forming composition | Amount of synthetic polyisoprene (parts) | 100 | 100 | 100 | 100 | 100 |
| | Amount of sodium dibutyl dithiocarbamate (parts) | 0.4 | 0.4 | 0.4 | 0.4 | 0.4 |
| | Amount of dispersant ("Scripset 550" (converted to sodium salt) (parts) | 0.6 | 0.6 | 0.6 | 0.6 | 0.6 |
| | Amount of zinc oxide (parts) | 1.5 | 1.5 | 1.5 | 1.5 | 1.5 |
| | Amount of sulfur (parts) | 1.5 | 1.5 | 1.5 | 1.5 | 1.5 |
| | Amount of antiaging agent ("Wingstay L") (parts) | 2 | 2 | 2 | 2 | 2 |
| | Amount of zinc diethyl dithiocarbomate (parts) | 0.35 | 0.35 | 0.35 | 0.35 | 0.35 |
| | Amount of zinc salt of mercaptobenzothiazole (parts) | 0.3 | 0.3 | 0.3 | 0.3 | 0.3 |
| | pH of dip-forming compositio | 10.5 | 10.5 | 10.5 | 10.5 | 10.5 |
| Dip-forming article | 300% tensile stress (MPa) | 1.7 | 1.7 | 1.6 | 1.7 | 0.8 |
| | Tensile strength (MPa) | 19.0 | 26.0 | 24.0 | 28.0 | 6.0 |
| | Elongation (%) | 900 | 900 | 800 | 900 | 500 |

The synthetic polyisoprene latexes which were obtained by continous centrifugation in Examples 1 to 4 all had no aggregates observed, did not require filtration or other steps for removing the aggregates, were excellent in operation efficiency, and were also effectively suppressed in foaming. In addition, the dip-formed articles which were obtained using the synthetic polyisoprene latexes which were obtained in these Examples 1 to 4 were all superior in 300% tensile stress, tensile strength, and elongation.

On the other hand, in Comparative Example 1 where the content of cyclohexane is a large amount of 1000 weight ppm, and therefore the requirements of the present invention are not met, the obtained dip-formed article was inferior in tensile stress, tensile strength, and elongation.

### INDUSTRIAL APPLICABILITY

The formed article obtained by dip-forming the dip-forming composition of the present invention is suitable for nipples for nursing bottles, droppers, tubes, water pillows, balloon sacks, catheters, condoms, or other medical products; balloons, dolls, balls, or other toys; press-forming use bags, gas storing bags, or other industrial products; surgical, diagnostic, household, agricultural, fishing, and industrial use gloves; finger sacks, etc.

## Claims

1. A latex of synthetic polyisoprene with a weight average molecular weight of 10, 000 to 5, 000, 000, a volume average particle size of 0.5 to 10 µm, and a content of a total of an alicyclic hydrocarbon solvent and aromatic hydrocarbon solvent of 500 weight ppm or less, wherein
the latex is obtained by emulsifying a solution or fine suspension of synthetic polyisoprene which have been dissolved or finely dispersed in an organic solvent in the presence of surfactant which includes a sodium salt or potassium salt of a fatty acid and alkylbenzene sulfonate in water and removing the organic solvent,
a ratio of use of the sodium salt or potassium salt of a fatty acid and alkylbenzene sulfonate is 1:1 to 10:1 as a weight ratio of "sodium salt or potassium salt of a fatty acid":"alkylbenzene sulfonic acid salt" when emulsifying, and
a residual amount of the surfactant in the latex is 0.5 to 2 parts by weight with respect to 100 parts by weight of the total of the synthetic polyisoprene.

2. The latex as set forth in claim 1 wherein said organic solvent is an alicyclic hydrocarbon solvent and/or aromatic hydrocarbon solvent.

3. The latex as set forth in claim 2 wherein said alicyclic hydrocarbon solvent is cyclohexane and said aromatic hydrocarbon solvent is toluene.

4. The latex as set forth in any one of claims 1 to 3 wherein said sodium salt or potassium salt of fatty acid is sodium rosinate and said alkylbenzene sulfonic acid salt is sodium dodecylbenzene sulfonate.

5. A dip-forming composition containing a latex as set forth in any one of claims 1 to 4, a sulfur-based vulcanizer, and a vulcanization accelerator.

6. The dip-forming composition as set forth in claim 5 which further contains zinc oxide.

7. A dip-formed article obtained by dip-forming the dip-forming composition as set forth in claim 5 or 6.

## Patentansprüche

1. Latex aus synthetischem Polyisopren mit einem gewichtsmittleren Molekulargewicht von 10.000 bis 5.000.000, einer volumenmittleren Teilchengröße von 0,5 bis 10 µm und einem Gesamtgehalt von einem alicyclischen Kohlenwasserstofflösungsmittel und einem aromatischen Kohlenwasserstofflösungsmittel von 500 Gewichts-ppm oder weniger, wobei
der Latex erhalten wurde durch Emulgieren einer Lösung oder einer feinen Suspension von synthetischem Polyisopren, das in einem organischen Lösungsmittel gelöst oder fein dispergiert wurde, in Gegenwart eines Tensids, welches ein Natriumsalz oder Kaliumsalz einer Fettsäure und ein Alkylbenzolsulfonat enthält, in Wasser und Entfernen des organischen Lösungsmittels, wobei das Verhältnis bei der Verwendung von dem Natriumsalz oder dem Kaliumsalz der Fettsäure und dem Alkylbenzolsulfonat 1:1 bis 10:1 als Gewichtsverhältnis von "Natriumsalz oder Kaliumsalz von Fettsäure" : "Alkylbenzolsulfonsäuresalz" ist, beim Emulgieren, und
eine Restmenge des Tensids in dem Latex 0,5 bis 2 Gewichtsteile in Bezug auf 100 Gewichtsteile des gesamten synthetischen Polyisoprens ist.

2. Latex gemäß Anspruch 1, wobei das organische Lösungsmittel ein alicyclisches Kohlenwasserstofflösungsmittel und/oder aromatisches Kohlenwasserstofflösungsmittel ist.

3. Latex gemäß Anspruch 2, wobei das alicyclische Kohlenwasserstofflösungsmittel Cyclohexan ist und das genannte aromatische Kohlenwasserstofflösungsmittel Toluol ist.

4. Latex gemäß einem der Ansprüche 1 bis 3, wobei das genannte Natriumsalz oder Kaliumsalz der Fettsäure Natriumrosinat und das genannte Alkylbenzolsulfonsäuresalz Natriumdodecylbenzolsulfonat ist.

5. Tauchformungszusammensetzung, enthaltend einen Latex gemäß einem der Ansprüche 1 bis 4, einen schwefelbasierten Vulkanisator und einen Vulkanisationsbeschleuniger.

6. Tauchformungszusammensetzung gemäß Anspruch 5, welche zusätzlich Zinkoxid enthält.

7. Tauchgeformter Gegenstand, erhältlich durch Tauchformen der Tauchformungszusammensetzung gemäß Anspruch 5 oder 6.

## Revendications

1. Latex de polyisoprène synthétique ayant une masse moléculaire moyenne en masse de 10 000 à 5 000 000, une taille moyenne volumique de particule de 0,5 à 10 µm, et une teneur d'un total d'un solvant hydrocarbure alicyclique et d'un solvant hydrocarbure aromatique de 500 ppm en poids ou moins, dans lequel
le latex est obtenu en émulsifiant une solution ou une fine suspension de polyisoprène synthétique qui a été dissous ou finement dispersée dans un solvant organique en présence d'un tensioactif qui inclut un sel de sodium ou un sel de potassium d'un acide gras et un alkylbenzènesulfonate dans de l'eau et en éliminant le solvant organique,
un rapport d'utilisation du sel de sodium ou du sel de potassium d'un acide gras et d'un alkylbenzènesulfonate est de 1 : 1 à 10 : 1 en tant que rapport en poids de « sel de sodium ou sel de potassium d'un acide gras » : « sel d'acide alkylbenzènesulfonique » lors de l'émulsification, et
une quantité résiduelle du tensioactif dans le latex est de 0,5 à 2 parties en poids par rapport à 100 parties en poids du total du polyisoprène synthétique.

2. Latex selon la revendication 1, dans lequel ledit solvant organique est un solvant hydrocarbure alicyclique et/ou un solvant hydrocarbure aromatique.

3. Latex selon la revendication 2, dans lequel ledit solvant hydrocarbure alicyclique est le cyclohexane et ledit solvant hydrocarbure aromatique est le toluène.

4. Latex selon l'une quelconque des revendications 1 à 3, dans lequel ledit sel de sodium ou sel de potassium de l'acide gras est le rosinate de sodium et ledit sel d'acide d'alkylbenzènesulfonique est le dodécylbenzènesulfonate de sodium.

5. Composition de formation par plongement contenant un latex tel que précisé dans l'une quelconque des revendications 1 à 4, un vulcaniseur à base de soufre et un accélérateur de vulcanisation.

6. Composition de formation par plongement selon la revendication 5, qui contient en outre de l'oxyde de zinc.

7. Article formé par plongement obtenu par formation par plongement de la composition de formation par plongement telle que précisée dans la revendication 5 ou 6.
